# EUROPEAN PATENT SPECIFICATION

(11) **EP 4 590 899 B1**
(45) Date of publication and mention of the grant of the patent: **24.06.2026**
(21) Application number: 24704897.8
(22) Date of filing: 11.01.2024
(51) Int. Cl.: E01F 7/04

(54) **PROTECTION NETTING FOR CIVIL WORKS WITH HIGHLY RESISTANT METAL WIRES WITH A PROTECTIVE COATING**
SCHUTZNETZ FÜR ZIVILBAUARBEITEN MIT HOCHRESISTENTEN METALLDRÄHTEN MIT EINER SCHUTZBESCHICHTUNG
FILET DE PROTECTION POUR TRAVAUX DE GÉNIE CIVIL COMPRENANT DES FILS MÉTALLIQUES DE RÉSISTANCE ÉLEVÉE DOTÉS D'UN REVÊTEMENT DE PROTECTION

(30) Priority: 12.01.2023 IT 202300000357
(43) Date of publication of application: 30.07.2025
(73) Proprietor: Officine Maccaferri S.p.A., 20122 Milano (MI) (IT)
(72) Inventor: GAGLIARDI, Antoine, 40126 Bologna (BO) (IT)
(74) Representative: Provvisionato, Paolo
(86) International application number: PCT/IB2024/050286
(87) International publication number: WO 2024/150165

(56) References cited:
- EP-A1- 3 056 608
- WO-A1-2018/137970
- WO-A1-2022/152697
- JP-A- 2003 285 395
- ANONYMOUS: "DIN EN 10223-3:2014-04 Stahldraht und Drahterzeugnisse f�r Z�une und Drahtgeflechte - Teil 3: Stahldrahtgeflecht mit sechseckigen Maschen f�r bauwirtschaftliche Zwecke; Deutsche Fassung EN 10223-3:2013", DIN EN NORM, DIN, DE, 1 April 2014 (2014-04-01), pages 1 - 27, XP009544320, DOI: 10.31030/1968092

## Description

### Field of the invention

The present invention relates to the field of civil works for containment and protection, for example, for constructing protection barriers against rockfalls or avalanches, for cortical protections of rocky walls in order to contain detachments of rocks, for three-dimensional stabilization of earth, escarpments, river banks, embankments, tunnels and road constructions, for constructing containment walls, for protecting banks of bodies of water, for constructing weirs and other debris-protection barriers along rivers and streams and water works in general, for constructing gabions and other products made of metal nettings, and any other use of the generally known civil type.

The present invention has been developed with particular regard for a protection and containment metal netting which is constructed by interlacing with each other metal wires with a protective coating.

### Technological background

There are known a large number of types of metal nettings for containment and protection, such as, for example, nettings with loose mesh, electro-welded nettings, nettings with hexagonal mesh with single, double or triple twists. Single-twist netting means a net in which adjacent wires are twisted over each other in a spiral pattern, such that each wire is wound over the other wire with a 180° twist, i.e., half a turn. Double-twist netting, also called triple-twist netting in some contexts, refers to a net in which adjacent wires are twisted over each other forming at least one turn and half, i.e., making at least 1.5 turns around the other wire, in a single direction of twist at each node of the net. Compared with single-twist nets, double-twist (or triple-twist or more) nets have the advantage that the breakage of a single wire of the net does not cause the entire net to open, but remains circumscribed, since each node of the net exhibits an inherent resistance to unraveling due to the greater than 360° twist of one wire around the other, in a single direction of rotation.

Each type of netting usually has a specific application in accordance with the technical features of the metal wires which compose it and the type of mutual arrangement of such wires. Thus, for example, an electro-welded netting is usually composed of a plurality of longitudinal wires and a plurality of transverse wires which are welded to each other at the points of intersection so as to form a weave with square and/or rectangular mesh. The electro-welded nettings may be constituted by metal wires with diameters even of 12 mm and therefore have a great mechanical resistance to stress.

There are known applications in the field of area enclosures, for example, gardens and the like, which generally use nettings with a single twist with metal wires which are protected by a plastics coating sheath. This type of netting does not have to support any significant load and both the material of the wire and the material of the plastics coating have extremely low resistance, both mechanical strength and corrosion resistance. In fact, it is often less expensive to replace a rusted section of enclosure than to use materials which are of higher quality for the construction thereof. The field towards which the present invention is directed is completely different and targets geo-structural uses in which mechanical, anti-corrosive and anti-abrasion performance levels of a very different order of magnitude are required. For this reason, the technology used in the field of enclosure nettings is not relevant, nor can it be taken into consideration in the case of the present invention.

An example of a protection netting for geo-structural use is the netting constituted by a plurality of crosswise steel wires or cables which are arranged at an angle relative to each other and preferably perpendicularly. The cables may also have a diameter of from 10 to 12 mm and, at the intersection points, are blocked on each other by means of connection devices of various types, the most common of which comprise a pair of steel wires which wind with highly tightened coils around the above-mentioned intersection points. These nettings have a great resistance to stress and, at the same time, sufficient flexibility to absorb the energy of the bodies which hit them and which are supported thereon, such as, for example, stones, rocks or the like. An example of this type of netting is illustrated and described in the European Patent No. EP 0 940 503 by the same Applicant.

Another type of metal netting is the netting constituted by metal wires which are interlaced with each other and which are mutually twisted with a number of turns around each other. The known metal nettings with a double twist (sometimes also called triple twist) form part of this type, wherein the wires are twisted around each other unidirectionally for at least 1.5 turns, in a single clockwise or counter-clockwise direction in each node, so as to form the mesh of the netting, which are typically hexagonal. These nettings can be used per se, where applicable reinforced by ropes or wires with higher strength, as described in WO 2005/038143, WO 2011/030316 and WO 2018/146516 by the same Applicant. In other cases, these nettings are used to construct products for protection or containment, such as gabions made of metal nettings, or structures for consolidating earth, such as the product known by the commercial name Terramesh^{®} from Officine Maccaferri S.p.A.

European Standard EN 10223-3:2014-04 "Steel wire and wire products for fencing and netting - Part 3: Hexagonal steel wire mesh products for civil engineering purposes" is the technical standard for the manufacture of a hexagonal netting made of steel wire and describes the use of a base metla having a tensile strength in the range of 350 N/mm² (MPa) to 550 N/mm² (MPa).

As mentioned, each of the nettings of the known type is particularly suitable for being applied under specific conditions. In some cases, however, using a correct type of netting may be inconvenient, very disadvantageous and very expensive. For example, the installation of an electro-welded protective net having characteristics of great resistance to stress, may be complex and expensive as a result of the difficulties of transport, very uneconomical as a result of the costs of the material which forms it and difficult to install as a result of the stiffness thereof.

WO 1999/043894 describes a metal netting for protection against rock falls or for consolidating a layer of earth which is formed by interlacing wires which are resistant to corrosion. The wires of the netting which are interlaced with a single twist are made of highly resistant steel in the range from 1000 to 2000 MPa (or N/mm²) of the type used for metal ropes or for springs.

A netting of this type has the main disadvantages of being very rigid and difficult to manufacture as a result of the high strength of the metal wires which form it. In fact, it is not possible, in the protection nettings to be used in the field of the present invention, to fall below a given diameter of the metal wire because it would naturally be at the expense of the overall resistance of the netting, which is what is most important in geo-structural projects. Furthermore, although the metal wires are resistant to corrosion as a result of the intrinsic characteristics of the highly resistant stainless steel, this does not prevent, over time, the wires from rusting as a result of the corrosive environment and the atmospheric and environmental agents to which these nettings are exposed in typical installations of the field.

WO 2019/239220 describes a protective metal netting for embankments of the double-twist type with hexagonal mesh having a ratio between the width and length of each mesh less than 0.75. The metal wires are made of steel with a high content of carbon and have a resistance to stress in the range from 1500 to 1900 MPa. There is also described the possibility that the metal wires may have an anti-corrosion coating of zinc/aluminium at quantities of at least 150 g/m².

This netting also has the above-described problems of difficulty of production as a result of the high strength of the metal wires which have to have in any case an adequate diameter (of which no indication is given in WO 2019/239220) to provide the netting with adequate overall resistance for the geo-structural project. Another problem is the limited protection to corrosion of the steel wire used, so much so that there is described the possibility of coating the highly resistant wire with a zinc/aluminium alloy, for example, of the type known commercially as Galfan^{®}.

However, the known coating, based on zinc or zinc and aluminium, of the metal wire is not optimum under many conditions of use of the protection and containment nettings. There are often preferred over this coating the solutions which provide for a plastics coating of the metal wire, such as, for example, the polymer coating known by the commercial name Polimac^{®} from Officine Maccaferri S.p.A. Although this type of polymer coating, and more generally plastics coating, is certainly preferred with respect to a coating of zinc or zinc/aluminium, until now it has been used in the field of the present invention only on wires with a low content of carbon, typically with a tensile strength of 350 MPa.

WO 2022/152697 discloses a steel wire netting of the hexagonal mesh type for use in civil works, which comprises metal wires which have a high strength with a tensile strength of at least 1560 MPa and which can have a protective plastics coating.

The technical problem which the present Applicant has encountered provides for using metal wires having a strength greater than 350 MPa, which are covered with a protective polymer layer, in order to produce a metal netting with a double twist, is the fact that the plastics coating tends to crack at the twists, where the metal wires are twisted one over the other. This involves a discontinuity in the protective coating and a location for initiating the corrosion of the metal wire below.

What substantially influences the behaviour of the plastics coating is the radius of curvature in the twisting of the wire when it is twisted on another wire. For example, if a wire with a diameter of 2.2 mm and with a tensile strength of 750 MPa generally has a final mechanical resistance of approximately 2850 N, which is virtually equal to a wire with a diameter of 2.7 mm and with 500 MPa, the radius of curvature on a wire with a smaller diameter increases the mechanical stress on the wire itself during the double-twisting process. This obstacle has until now prevented the use of highly resistant wires which are therefore thinner, for the same strength, and which are covered with a protective plastics layer.

On the other hand, if it is desirable to increase the overall strength of the metal nettings by using the known steel wires which have a low carbon content and which are covered with a protective polymer layer, it would be necessary to increase the diameter of the metal wire with the resultant negative effects of increasing the weight of the netting per unit of surface-area and the quantity of coating plastics material, and in any case making the interlacing of the double-twist wires more difficult or impossible.

In the field, therefore, there has been perceived the need for providing protection nettings which have a high overall strength and which are relatively lightweight, and which are expertly interlaced and in which wires are protected by a protective plastics layer, in particular a polymer layer, which does not give way or have cracks or defects, particularly in the region of the interlacing zones in which the wires are twisted with respect to each other.

### Statement of invention

An object of the present invention is to overcome the disadvantages and to solve the problems of the prior art by providing a protection netting which has a high overall strength which is relatively lightweight and which is skilfully interlaced, and the wires of which are protected in a complete and reliable manner by a protective plastics layer, in particular a polymer layer, which does not give way or have cracks or defects, particularly in the region of the interlacing zones in which the wires are twisted with respect to each other.

Another object of the invention is to provide a protection and containment netting of the double-twist type which is formed by metal wires which have a high carbon content and which are covered with a protective plastics layer, particularly a polymer layer, which is resistant to the atmospheric agents.

Another object of the invention is to provide a protection netting of the above-indicated type by means of a rapid, secure and economical method which can also be carried out on machines and plants of the known type for the production of double-twist nettings without any excessively costly modifications.

These objects and other objects are achieved by a protection and containment netting and by a method for producing it, having the features indicated in the following claims.

According to one aspect, there is described a protection netting for civil works, particularly for containment and protection, for example, for constructing protection barriers against rockfalls or avalanches, for cortical protections of rocky walls in order to contain detachments of rocks, for three-dimensional stabilization of earth, escarpments, river banks, embankments, tunnels and road constructions, for constructing containment walls, for protecting banks of bodies of water, for constructing weirs and other debris-protection barriers along rivers and streams and water works in general, for constructing gabions and other products made of metal nettings, and any other use of the generally known civil type.

The protection netting, of the double-twisted or triple-twisted type, is completely or partially produced by interlacing with each other metal wires which have a high strength and which are covered with a protective plastics coating. The protective plastics coating may be extruded on the metal wire in accordance with extrusion techniques which are generally known in the sector. The metal wires may be steel wires with a tensile strength between 600 and 1350 MPa, more preferably in the range from 600 to 1000 MPa, and even more preferably in the range from 600 to 800 MPa.

It is particularly advantageous to define the thickness of the plastics coating to be in the range between 0.3 mm and 0.6 mm and more preferably between 0.5 and 0.55 mm.

It is further particularly advantageous to define that the diameter of the metal wire does not exceed 4 mm and more preferably does not exceed 3 mm.

The plastics coating of the metal wire may be included in the group of PE (polyethylene), PVC (polyvinyl chloride) and PA (polyamide). Preferably, the plastics coating is made of PE, particularly HDPE.

There is also described a method for producing a protection netting as mentioned above, comprising the steps of:
- providing a plurality of metal wires with a protective plastics coating having a tensile strength between 600 and 1350 MPa;
- weaving the coated metal wires with each other, producing a netting with hexagonal mesh with interlaced portions between the wires with single, double or triple twists.

In order to improve the adhesion of the plastics coating to the metal wire, there may be used a method which provides, alone or in combination, for the following technologies: thermal processes on the wire, for example, with the wire being heated before the extrusion; an increase of the contact surface-area by means of knurling or other systems; controlling the method for cooling the plastics material; improving the application pressure of the plastics material to the support; use of primers/bonding agents of various types, both before the extrusion and during the extrusion, both in the hot state and in the cold state; cleaning the wire, for example, by means of mechanical processes, chemical processes or by laser; fuse bonding or thermal bonding extrusion process; and other technologies which are directed towards improving the adhesion.

One method that has shown particular promise is, alone or in combination with one of the methods applied to the wire mentioned above, e.g., wire heating or knurling, to coat the wire, for example by coextrusion, with two different layers of polymer. A particularly effective solution is to coat the wire with a first layer of a high-performance polymer, coated in turn with a second layer of a cheaper polymer. The first layer of high-performance polymer can be selected in such a way that it exhibits excellent adhesion characteristics to the wire and at the same time provides an excellent adhesion base for the second, outermost polymer layer, which provides resistance to abrasion and UV ultraviolet rays.

According to a particular aspect, the plastics protective coating may comprise a first, innermost, polymer layer that directly coats the wire and has a first thickness. A second, outermost polymer layer coats the first polymer layer and has a second thickness, which is greater than the first thickness of the first polymer layer. The first polymer layer that directly coats the wire can be a polyethylene PE mixed with additives to promote its adhesion to the metal wire. The first polymer layer which coats the wire can be very thin, for example, no more than 0.1 mm thick. The second polymer layer, overlapping the first polymer layer, can be, for example, a high-density polyethylene HDPE, which is less expensive than the polymer forming the first layer. The second polymer layer can be thicker than the first layer, for example it can be 0.4 mm so that, together with a first 0.1 mm polymer layer, a total of 0.5 mm wire coating polymer layer is obtained. Of course, the sizes given are illustrative and can be selected appropriately by a skilled technician by balancing the strength characteristics and the overall cost of the plastics coating of the wire, also based on the diameter of the wire which is required to meet the mechanical strength specifications of the wire mesh.

In fact, it has surprisingly been discovered that, unlike what would appear at first sight, if the adhesion characteristics of the plastics coating with respect to the metal wire are improved, it becomes possible to improve the resistance of the plastics coating during the method for twisting the plastics-coated wire during the generation of the twisting between two wires, particularly when this twisting is multiple, for example, as in nettings with hexagonal mesh with a double twist. If, conversely, the plastics coating is able to slide on the plastics wire, it is considered that the force applied to the plastics-coated wire during the double twisting is discharged mainly to the plastics coating which behaves in the manner of a sliding sheath and which therefore may break and crack particularly in the region of the twisting with the other wire.

It has further been discovered that, by improving the adhesion of the plastics coating to the metal wire, it is possible to use - for the same resistance of the netting - metal wires with a relatively small diameter no greater than 4 mm, and more preferably no greater than 3 mm, using steels with a tensile strength between 600 and 1350 MPa. This result also allows a reduction in the plastics coating, keeping it in the range between 0.3 mm and 0.6 mm and more preferably between 0.5 mm and 0.55 mm. This means that the plastics-coated wire which has greater dimensions and which can advantageously be used to achieve the objects predetermined by the present invention comprises a diameter of 4 mm of the metal wire, to which there is added 1.1 mm of plastics coating, for a maximum total diameter of the plastics-coated wire of 5.1 mm, which can be processed without particular modifications to the known machines for weaving nettings, in particular machines for producing double-twist nettings with hexagonal mesh.

### Brief description of the drawings

Additional features and advantages will be appreciated from the following detailed description of a preferred embodiment with reference to the appended drawings which are given by way of non-limiting example and in which:
- Figure 1 is a front view of a portion of double-twist netting which is produced with a multiplicity of metal wires which are covered with a protective layer of a plastics material; and
- Figure 2 is a schematic, perspective view of a section of metal wire which is covered with a protective layer of a plastics material and which is used to produce the netting of Figure 1.

### Detailed description

In the following embodiments, there are described features which allow the invention to be carried out.

The materials, forms and functions described and illustrated do not limit the present invention but are only set out to allow a person skilled in the art to understand and carry out the invention according to preferred though non-exclusive embodiments.

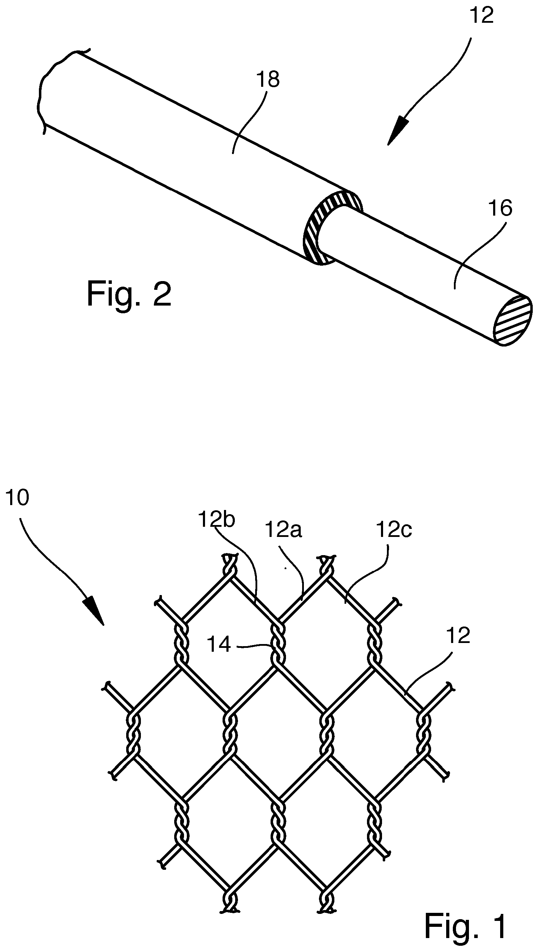

Now with reference to Figure 1, there is illustrated a protection and containment netting 10 of the double-twist type, also called triple-twist in some cases, is illustrated, which includes in the nodes a unidirectional twist of one wire over the other for at least 1.5 times. Although the invention is not limited to this specific type of netting, which is given purely by way of non-limiting example, the invention has been found to be particularly effective for use with this particular type of netting as a result of the intrinsic difficulties of carrying out the invention using the known techniques. The protection netting illustrated in Figure 1 is particularly suitable for use for civil works for containment and protection, for example, for constructing protection barriers against rockfalls or avalanches, for cortical protections of rocky walls in order to contain detachments of rocks, for three-dimensional stabilization of earth, escarpments, river banks, embankments, tunnels and road constructions, for constructing containment walls, for protecting banks of bodies of water, for constructing weirs and other debris-protection barriers along rivers and streams and water works in general, for constructing gabions and other products made of metal nettings, and any other use of the generally known civil type, where significant characteristics of mechanical strength and resistance to corrosion and abrasion are required.

The netting 10 is completely or partially constructed by interlacing a plurality of plastics-coated metal wires 12, that is to say, each one comprising, as can be schematically seen in Figure 2, a metal core 16 and an integral plastics coating 18, that is to say, which covers the whole of the wire, without any interruption in continuity over the entire extent of the wire 12 and therefore of the netting 10.

In the double-twist netting 10, each wire 12 extends in a substantially longitudinal direction which is vertical in Figure 1. If a specific wire 12a is considered, it can be seen how it is interlaced with a double twist alternately with the two wires 12b, 12c adjacent thereto in order to form double-twist nodes 14 where the pairs of wires 12a, 12b or 12a, 12c are wound in a single direction for each node, respectively, in a clockwise or counter-clockwise direction, for 1.5 turns.

The metal core 16 of the plastics-coated metal wire 12 is made of steel with a high carbon content, typically in the range from 600 to 1350 MPa, preferably in the range from 600 to 1000 MPa, even more preferably in the range from 600 to 800 MPa.

In order to maintain sufficient flexibility of the metal wire, the diameter thereof is preferably less than 3 mm, even if the use of wires with greater diameters is not excluded, for example, up to 4 mm, where the tensile strength is nearer the lower limit indicated above of 600 MPa. In any case, it is also possible to exceed the upper limit indicated of 4 mm, even if in this case the improvements in terms of savings of material and with respect to the environment are less pronounced and advantageous with respect to the use of wires with a smaller diameter.

The metal wire is covered with a protective layer of plastics material, for example, polymer material. By way of non-limiting example, the coating material may be PE, PVC or PA, the latter material showing better hardness characteristics, while PE is preferable in terms of costs. It has been found that an ideal thickness of the plastics coating of the wire 12 is in the range between 0.3 mm and 0.6 mm and preferably between 0.5 mm and 0.55 mm, even if naturally producing plastics coatings with a smaller thickness or greater thickness than the one indicated is not excluded even if the advantages resulting from, on the one hand, a thickness sufficient to ensure adequate protection and resistance over time and, on the other hand, the saving in terms of protective plastics material and the environmental friendliness are substantially reduced.

One embodiment not corresponding to the invention provides for producing a double-twist netting with a plastics-coated wire with a PA coating. The double-twist hexagonal netting may provide a mesh with dimensions which are conventionally indicated as 8 x 10, with wires having a diameter of the metal core of 2.20 mm, with a tensile strength of 550 MPa. Production tests which are carried out on such a netting have indicated that the polymer coating is not subjected to breakage or cracking during the twisting of the wires in the machine.

Another example is the example of a double-twist netting as indicated above, but with a protective coating which is more economical, for example, made of PE. In this case, it has been advantageous to improve the adhesion of the plastics coating to the metal substrate in order to improve the behaviour of the plastics coating when it is subjected to a mechanical force such as the force of twisting the wire in the machine. Naturally, the improvement of the adhesion of the plastics coating to the metal substrate is also to the benefit of the performance levels if a plastics coating with better performance levels is used, such as the above-mentioned PA coating.

Another preferred embodiment is to use a protective coating formed by two or more layers of different materials, efor example different polymers or polymers having different characteristics. A particular embodiment involves coating the wire, for example by coextrusion, with two layers of polymers, in which a first polymer layer, which directly coats the wire, is a high-performance polymer and is coated in turn by a second, cheaper polymer layer, which provides the resistance of the coating to abrasion and UV ultraviolet rays. The first layer of high-performance polymer can be selected to exhibit excellent adhesion characteristics to the wire and at the same time provide an excellent base to which the second, outermost polymer layer, which provides abrasion and UV ultraviolet resistance, can be adhered.

The first polymer layer that directly coats the wire can be a polyethylene PE mixed with additives to promote its adhesion to the wire. The second polymer layer, overlapping the first polymer layer, can be, for example, a high-density HDPE polyethylene, which is less expensive than the polymer forming the first layer. In the case, for example, it is desired to make a plastics coating having a thickness of 0.5 mm, the first polymer layer can have a relatively low thickness, such as up to 0.1 mm. The second layer of polymer can then be thicker than the first layer, for example up to 0.4 mm so that in total a wire coating polymer layer of 0.5 mm is obtained. Of course, the indicated dimensions are illustrative and may be selected appropriately by a skilled technician by balancing the strength characteristics and the overall cost of the wire plastics coating, also on the basis of the diameter of the wire which is required to meet the mechanical strength specifications of the wire mesh.

In order to improve the adhesion of the plastics coating to the metal substrate, it is possible to use various techniques, alone or in combination with each other. There may be mentioned, for example, thermal processes on the wire, for example, with the wire being heated before the extrusion; increasing the contact surface-area by means of knurling or other systems; controlling the method for cooling the plastics material; improving the application pressure of the plastics material to the support; use of primers/bonding agents of various types, both before the extrusion and during the extrusion, both in the hot state and in the cold state; cleaning the wire, for example, by means of mechanical processes, chemical processes or by laser; fuse bonding or thermal bonding extrusion process; and other technologies which are directed towards improving the adhesion.

In the case where it is foreseen to coat the wire with two different layers of different polymers, known coextrusion techniques can be used. An alternative is to use a mixed process in which the first polymer layer is laid on the wire by melt bed, or fuse bonding, while the second, outermost polymer layer can be extruded to cover the first polymer layer.

The use of these techniques allows an improvement in the mechanical behaviour of the plastics coating of the wire and the production of a double-twist netting with wires having a strength greater than 550 MPa for the same diameter of the wire, also with positive results in terms of the environment for reduced use of materials, both metal material and plastics material. One such netting, by using wires with a smaller diameter, is also lighter and therefore can be transported more easily at reduced cost to the installation location. If extensive sheets of nettings have to be manually positioned, such as, for example, in cortical protections or in the consolidation of earth and embankments, a reduced force from the operators for positioning is necessary.

Naturally, the principle of the invention remaining the same, the forms of embodiment and details of construction may be varied widely with respect to those described and illustrated without thereby departing from the scope of the present invention defined by the claims.

## Claims

1. A protection netting (10) for civil works, comprising metal wires (16) which have high strength and which have a protective plastics coating (18), the netting being of the double-twist (14) or triple-twist type with hexagonal mesh, **characterized in that** the wires are steel wires with a tensile strength between 600 and 1350 MPa.

2. A protection netting according to the preceding claim, wherein the steel wires have a tensile strength in the range from 600 to 1000 MPa, preferably in the range from 600 to 800 MPa.

3. A protection netting according to any one of the preceding claims, wherein the plastics coating (18) has a thickness in the range between 0.3 mm and 0.6 mm and preferably between 0.5 mm and 0.55 mm.

4. A protection netting according to any one of the preceding claims, wherein the metal wire (16) has a diameter less than 4 mm and preferably less than 3 mm.

5. A protection netting according to any one of the preceding claims, wherein the plastics coating (18) is a coating selected from PE, PVC and PA.

6. A protection netting according to any one of the preceding claims, wherein the plastics protective coating (18) comprises at least two layers of polymers having different characteristics from each others.

7. A protection netting according to claim 6, wherein the plastics protective coating (18) comprises a first, innermost polymer layer which directly covers the metal wire (16) and has a first thickness and a second, outermost polymer layer which covers the first polymer layer and has a second thickness which is greater than the first thickness of the first polymer layer.

8. A method for producing a protection netting according to any one of the preceding claims, comprising the steps of:
- providing a plurality of metal wires (16) with a protective plastics coating (18), the wires having a tensile strength between 600 and 1350 MPa;
- weaving the coated metal wires (16) with each other, producing a netting (10) with hexagonal mesh with interlaced portions between the wires of with double or triple twists (14).

9. A method according to claim 8, wherein the metal wires (16) are coated with a plastics material (18) which is included in the group of PE, PVC and PA.

10. A method according to claim 9, wherein the metal wires (16) are coated with PE.

11. A method according to any one of claims 8 to 10, wherein the plastic protective coating (18) comprises at least two layers of polymers having different characteristics from each other.

12. A method according to claim 11, wherein a coextrusion process is used to coat the wire with the at least two polymer layers.

13. A method according to claim 11 or claim 12, wherein a first, innermost, thinner polymer layer is made from a PE polymer that includes additives that promote its adhesion to the wire (16), a second, outermost, thicker polymer layer being made from an HDPE polymer.

14. A method according to any one of claims 8 to 13, wherein there is improved the adhesion of the plastics coating (18) to the metal wire (16) by means of a technique or a combination of techniques which is selected from the group of: thermal processes on the wire, for example, with the wire being heated before the extrusion; an increase of the contact surface-area by means of knurling or other systems; controlling the method for cooling the plastics material; improving the application pressure of the plastics material to the support; use of primers/bonding agents of various types, both before the extrusion and during the extrusion, both in the hot state and in the cold state; cleaning the wire; fuse bonding or thermal bonding extrusion process.

## Patentansprüche

1. Schutznetz (10) für Zivilbauarbeiten, mit Metalldrähten (16), die eine hohe Festigkeit besitzen und die eine schützende Kunststoffbeschichtung (18) aufweisen, wobei das Netz vom doppelt verdrillten (14) oder dreifach verdrillten Typ ist mit sechseckigen Maschen, **dadurch gekennzeichnet, dass** die Drähte Stahldrähte mit einer Zugfestigkeit zwischen 600 und 1350 MPa sind.

2. Schutznetz nach dem vorhergehenden Anspruch, wobei die Stahldrähte eine Zugfestigkeit im Bereich von 600 bis 1000 MPa, vorzugsweise im Bereich von 600 bis 800 MPa haben.

3. Schutznetz nach einem der vorhergehenden Ansprüche, wobei die Kunststoffbeschichtung (18) eine Dicke im Bereich zwischen 0,3 mm und 0,6 mm und vorzugsweise zwischen 0,5 mm und 0,55 mm hat.

4. Schutznetz nach einem der vorhergehenden Ansprüche, wobei der Metalldraht (16) einen Durchmesser von weniger als 4 mm und vorzugsweise von weniger als 3 mm hat.

5. Schutznetz nach einem der vorhergehenden Ansprüche, wobei die Kunststoffbeschichtung (18) eine Beschichtung ist, die aus PE, PVC und PA ausgewählt ist.

6. Schutznetz nach einem der vorhergehenden Ansprüche, wobei die schützende Kunststoffbeschichtung (18) mindestens zwei Schichten von Polymeren umfasst, die voneinander verschiedene Eigenschaften haben.

7. Schutznetz nach Anspruch 6, wobei die schützende Kunststoffbeschichtung (18) eine erste, innerste Polymerschicht umfasst, die den Metalldraht (16) direkt bedeckt und eine erste Dicke hat, und eine zweite, äußerste Polymerschicht, die die erste Polymerschicht bedeckt und eine zweite Dicke hat, die größer ist als die erste Dicke der ersten Polymerschicht.

8. Verfahren zur Herstellung eines Schutznetzes nach einem der vorhergehenden Ansprüche, mit den folgenden Schritten:
- Bereitstellen einer Vielzahl von Metalldrähten (16) mit einer schützenden Kunststoffbeschichtung (18), wobei die Drähte eine Zugfestigkeit zwischen 600 und 1350 MPa haben;
- Verweben der beschichteten Metalldrähte (16) miteinander, wobei ein Netz (10) mit sechseckigen Maschen mit verflochtenen Abschnitten zwischen den Drähten mit Doppel- oder Dreifachwindungen (14) entsteht.

9. Verfahren nach Anspruch 8, wobei die Metalldrähte (16) mit einem Kunststoffmaterial (18) beschichtet sind, das in der Gruppe von PE, PVC und PA enthalten ist.

10. Verfahren nach Anspruch 9, wobei die Metalldrähte (16) mit PE beschichtet sind.

11. Verfahren nach einem der Ansprüche 8 bis 10, wobei die schützende Kunststoffbeschichtung (18) mindestens zwei Schichten von Polymeren umfasst, die voneinander verschiedene Eigenschaften haben.

12. Verfahren nach Anspruch 11, wobei ein Koextrusionsverfahren verwendet wird, um den Draht mit den mindestens zwei Polymerschichten zu beschichten.

13. Verfahren nach Anspruch 11 oder Anspruch 12, wobei eine erste, innerste, dünnere Polymerschicht aus einem PE-Polymer besteht, das Additive enthält, die seine Haftung an dem Draht (16) fördern, wobei eine zweite, äußerste, dickere Polymerschicht aus einem HDPE-Polymer besteht.

14. Verfahren nach einem der Ansprüche 8 bis 13, wobei die Haftung der Kunststoffbeschichtung (18) an dem Metalldraht (16) mit Hilfe einer Technik oder einer Kombination von Techniken verbessert wird, die aus der folgenden Gruppe ausgewählt sind: thermische Prozesse an dem Draht, wo zum Beispiel der Draht vor der Extrusion erhitzt wird; eine Vergrößerung der Kontaktfläche mit Hilfe von Rändelung oder anderen Systemen; Steuerung des Verfahrens zum Abkühlen des Kunststoffmaterials; Verbesserung des Anpressdrucks des Kunststoffmaterials auf dem Träger; Verwendung von Grundierungen/Haftvermittlern verschiedener Arten, sowohl vor der Extrusion als auch während der Extrusion, beides im heißen Zustand und im kalten Zustand; Reinigen des Drahtes; ein Extrusionsverfahren mit Schmelzverbindung oder thermischer Verbindung.

## Revendications

1. Filet de protection (10) pour travaux de génie civil, comprenant des fils métalliques (16) qui présentent une résistance élevée et qui possèdent un revêtement de protection en plastique (18), le filet étant à double torsion (14) ou à triple torsion avec un maillage hexagonal, **caractérisé en ce que** les fils sont des fils en acier avec une résistance à la traction comprise entre 600 et 1350 MPa.

2. Filet de protection selon la revendication précédente, dans lequel les fils en acier présentent une résistance à la traction de l'ordre de 600 à 1000 MPa, de préférence de l'ordre de 600 à 800 MPa.

3. Filet de protection selon l'une quelconque des revendications précédentes, dans lequel le revêtement en plastique (18) présente une épaisseur comprise entre 0,3 mm et 0,6 mm, et de préférence entre 0,5 mm et 0,55 mm.

4. Filet de protection selon l'une quelconque des revendications précédentes, dans lequel le fil métallique (16) présente un diamètre inférieur à 4 mm et de préférence inférieur à 3 mm.

5. Filet de protection selon l'une quelconque des revendications précédentes, dans lequel le revêtement en plastique (18) est un revêtement choisi parmi du PE, du PVC et du PA.

6. Filet de protection selon l'une quelconque des revendications précédentes, dans lequel le revêtement de protection en plastique (18) comprend au moins deux couches de polymères ayant des caractéristiques différentes les uns des autres.

7. Filet de protection selon la revendication 6, dans lequel le revêtement de protection en plastique (18) comprend une première couche de polymère la plus intérieure qui recouvre directement le fil métallique (16) et présente une première épaisseur, et une deuxième couche de polymère la plus extérieure qui recouvre la première couche de polymère et présente une deuxième épaisseur qui est supérieure à la première épaisseur de la première couche de polymère.

8. Procédé de fabrication d'un filet de protection selon l'une quelconque des revendications précédentes, comprenant les étapes consistant à :
- prévoir une pluralité de fils métalliques (16) avec un revêtement de protection en plastique (18), les fils ayant une résistance à la traction comprise entre 600 et 1350 MPa ;
- tisser les fils métalliques revêtus (16) les uns avec les autres, afin de produire un filet (10) avec un maillage hexagonal avec des parties entrelacées entre les fils à double ou triple torsion (14).

9. Procédé selon la revendication 8, dans lequel les fils métalliques (16) sont revêtus d'un matériau en plastique (18) qui est inclus dans le groupe du PE, du PVC et du PA.

10. Procédé selon la revendication 9, dans lequel les fils métalliques (16) sont revêtus avec du PE.

11. Procédé selon l'une quelconque des revendications 8 à 10, dans lequel le revêtement de protection en plastique (18) comprend au moins deux couches de polymères ayant des caractéristiques différentes les uns des autres.

12. Procédé selon la revendication 11, dans lequel un processus de coextrusion est utilisé pour enduire le fil avec les au moins deux couches de polymères.

13. Procédé selon la revendication 11 ou la revendication 12, dans lequel une première couche de polymère plus fine la plus intérieure est composée d'un polymère de PE qui contient des additifs qui favorisent son adhérence au fil (16), une deuxième couche de polymère plus épaisse la plus extérieure étant composée d'un polymère de HDPE.

14. Procédé selon l'une quelconque des revendications 8 à 13, dans lequel l'adhérence du revêtement en plastique (18) sur le fil métallique (16) est améliorée à l'aide d'une technique ou d'une combinaison de techniques qui est choisie parmi le groupe consistant en : des processus thermiques sur le fil, par exemple, avec le fil qui est chauffé avant l'extrusion ; une augmentation de la superficie de la surface de contact à l'aide d'un moletage ou d'autres systèmes ; un contrôle du procédé pour refroidir le matériau en plastique ; une amélioration de la pression d'application du matériau en plastique sur le support ; l'utilisation d'amorces/de liants de différents types, avant l'extrusion et pendant l'extrusion, à l'état chaud et à l'état froid ; le nettoyage du fil ; un processus d'extrusion par liage par fusion ou liage thermique.
